# EUROPEAN PATENT APPLICATION

(11) **EP 2 123 195 A1**
(43) Date of publication of application: **25.11.2009**
(21) Application number: 08703971.5
(22) Date of filing: 28.01.2008
(51) Int. Cl.: A47C 7/40, A47C 27/14

(54) **BACK PAD AND SEAT FOR VEHICLE**

(30) Priority: 06.02.2007 JP 2007026955
(71) Applicant: Bridgestone Corporation, Tokyo 1048340 (JP)
(72) Inventor: YAMASAKI, Kouichirou, Yokohama-shi Kanagawa 244-0812 (JP); HIRATA, Yutaka, Yokohama-shi Kanagawa 244-0812 (JP)
(74) Representative: Whalley, Kevin
(86) International application number: PCT/JP2008/051162
(87) International publication number: WO 2008/096620

(57) **Abstract**

A back pad which provides good ride comfort to occupants and has a good occupant support performance even though the thickness thereof is reduced, and a vehicle seat provided with the back pad. The back pad 1 has a lumbar portion 2, a back support portion 3 disposed above the lumbar portion 2, and side portions 4, 4 disposed at both left and right sides of the lumbar portion 2 and the back support portion 3. This back pad 1 is made of expanded polyurethane foam. The hysteresis loss of the back support portion 3 is larger than that of the lumbar portion 2, and the lumbar portion 2 has a good vibration absorbing performance. The hardness of the lumbar portion 2 is higher than that of the back support portion 3, and the lumbar portion 2 has a good support performance for an occupant's lumbar region.

## Description

### Field of the Invention

The present invention relates to a back pad of a vehicle seat and a vehicle seat provided with this back pad.

### Background of the Invention

A back pad of a seat of an automobile or the like has at least a lumbar portion and a back support portion disposed above the lumbar portion. This back pad is produced by injecting an urethane formulation stock solution, which is prepared by mixing a polyol component formulation solution and an isocyanate component, into a mold, and conducting foam molding.

In the back pad for a vehicle, the lumbar portion and the back support portion, which are in direct contact with the back of an occupant, receive most of the occupant's weight, and materials for these portions have a close relation to the sitting comfort and the ride comfort.

In Fig. 6 and Paragraph 0048 of Japanese Unexamined Patent Application Publication No. 2006-204887, it is described that the lumbar portion and the back support portion are constituted by a high-density urethane foam, and the side portions are constituted by a low-density urethane foam, respectively, and that the 25% hardness according to JASO-B408 of this low-density urethane foam is adjusted to be 50% to 98% of that of the high-density urethane foam. Patent Document 1: Japanese Unexamined Patent Application Publication No. 2006-204887

### Summary of the Invention

An object of the present invention is to provide a back pad which provides good ride comfort to occupants and has a good occupant support performance even though the thickness thereof is reduced, and a vehicle seat provided with this back pad.

A back pad according to a first aspect is characterized in that it is a back pad for a vehicle seat having at least a lumbar portion and a back support portion disposed above the lumbar portion, wherein the hysteresis loss of the back support portion is larger than that of the lumbar portion and the hardness of the lumbar portion is higher than that of the back support portion.

A back pad according to a second aspect is **characterized in that** it is the back pad according to the first aspect, wherein the hysteresis loss of the back support portion is 1.01 to 10 times larger than the hysteresis loss of the lumbar portion.

A back pad according to a third aspect is **characterized in that** it is the back pad according to the first or the second aspect, wherein the hardness of the lumbar portion is 1.01 to 10 times higher than the hardness of the back support portion.

A back pad according to a fourth aspect is **characterized in that** it is the back pad according to any of the first to the third aspects, wherein the thickness of the lumbar portion and the back support portion is 5 to 40 mm.

A back pad according to a fifth aspect is **characterized in that** it is the back pad according to any of the first to the fourth aspects, which comprises side portions disposed at both left and right sides of the lumbar portion and the back support portion.

A back pad according to a sixth aspect is **characterized in that** it is the back pad according to the fifth aspect, wherein formulations of foam materials for the lumbar portion, the back support portion and the side portions are different.

A vehicle seat according to a seventh aspect is provided with the back pad according to any of the first to the sixth aspects.

In the back pad according to the present invention, the hardness of the lumbar portion is higher than that of the back support portion. By increasing the hardness of the lumbar portion as just described, good occupant support performance is provided. Further, by making the hysteresis loss of the lumbar portion smaller than that of the back support portion, the vibration absorbing performance of the lumbar portion is improved, and thereby providing good ride comfort to occupants. As just described, good occupant support performance and good vibration absorbing performance of the back pad are provided by the present invention, and therefore, required support performance and vibration absorbing performance can be obtained even though the thickness of the back pad is reduced. By reducing the thickness of the back pad, it becomes possible to expand the interior space of a vehicle.

### Brief Description of Drawings

Fig. 1 is a perspective view showing the back pad according to an embodiment of the present invention.
Fig. 2 is a graph showing load (N)-deflection (%) curves obtained in Example 1.

### Detailed Description

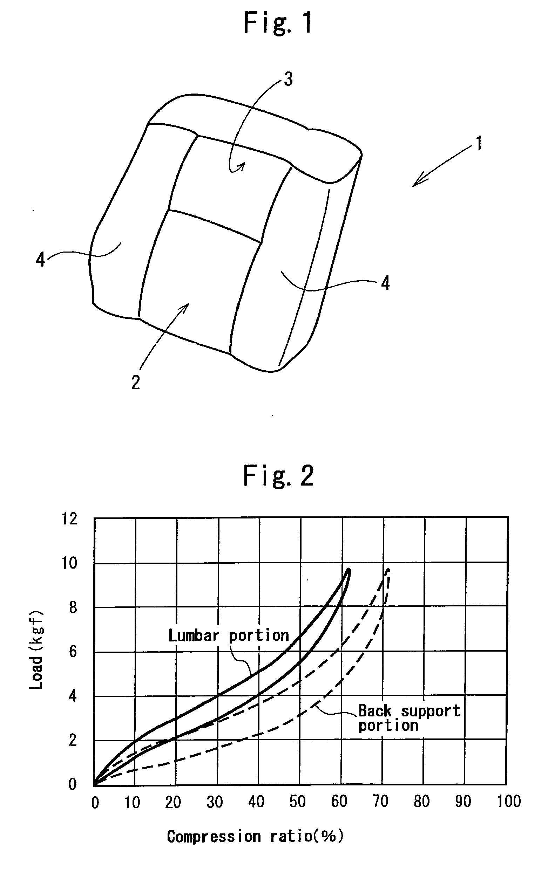

The embodiment will be described below with reference to the drawings. Fig. 1 is a perspective view of the back pad according to the embodiment. This back pad 1 has a lumbar portion 2, a back support portion 3 disposed above the lumbar portion 2, and side portions 4, 4 disposed at both left and right sides of the lumbar portion 2 and the back support portion 3. This back pad 1 is made of expanded polyurethane foam. By using a different formulation for each of foam materials for the lumbar portion 2, the back support portion 3 and the side portions 4, the hysteresis losses and the hardnesses of these portions become different.

In the following description, the hardness means the 25% hardness according to a hardness testing method specified in JASO-B408.

In the present invention, the hysteresis loss of the back support portion 3 is larger than that of the lumbar portion 2, and is preferably 1.01 to 5 times, particularly preferably 1.1 to 1.5 times larger than that of the lumbar portion 2.

As just described, by increasing the hysteresis loss of the back support portion 3, good vibration absorbing performance of the back support portion 3 is provided.

In addition, in the present invention, the hardness of the lumbar portion 2 is higher than that of the back support portion 3, and is preferably 1.01 to 3 times, particularly preferably 1.5 to 2.5 times higher than that of the back support portion 3.

As just described, by increasing the hardness of the lumbar portion, good support performance for an occupant's back is provided.

Because the vibration absorbing performance and the occupant support performance are excellent as just described, a prescribed vibration absorbing performance and support performance required depending on the type of vehicle will be fulfilled, even though the thickness of the back pad is reduced, for example, to about 5 to 40 mm, and consequently, it becomes possible to expand the interior space of a vehicle.

In this embodiment, lateral movement of an occupant's body can be prevented because the side portions 4 are provided. By making the hardness of the side portions 4 higher than the hardnesses of the lumbar portion 2 and the back support portion 3, this effect becomes pronounced.

It is preferable that the density of the side portions 4 be lower than the densities of the lumbar portion 2 and the back support portion 3, so that the weight of the back pad 1 can be reduced.

The hardness and the hysteresis loss of an urethane foam can be adjusted through the isocyanate index of an urethane formulation stock solution. For example, by preparing a formulation exhibiting a higher isocyanate index, a higher hardness and a smaller hysteresis loss are obtained. In the case where the densities of the back support portion and the lumbar portion are the same, by making the isocyanate index of a formulation for the lumbar portion higher than that of a formulation for the back support portion by about 4 to 10, the hardness of the lumbar portion can be adjusted to be 1.2 to 1.5 times higher than that of the back support portion, and the hysteresis loss of the back support portion can be adjusted to be 1.1 to 1.3 times larger than that of the lumbar portion. In addition, the hardness and the hysteresis loss can be also adjusted by changing POP, PPG, foam stabilizers or the like in the formulation.

The density can be adjusted by changing an expansion ratio.

In the above-described embodiment, though the lumbar portion 2 extends to the lower end of the back pad 1, the lower end portion of the back pad 1 may have a different property wherein the density, the hardness or the like is different from that of the lumbar portion 2. Likewise, though the back support portion 3 extends to the upper end of the back pad 1, the upper end portion of the back pad 1 may have a different property wherein the density, the hardness or the like is different from that of the back support portion 3.

It is desirable that the border between the lumbar portion 2 and the back support portion 3 be located at about 20% to 80% of the height of the back pad 1.

Though the above-described embodiment is an example of the application of the present invention to a seat for one person, a so-called separate seat, the present invention can be applied to a seat for two or more people, a so-called bench seat, as well.

### EXAMPLES AND COMPARATIVE EXAMPLES

The present invention will be described below more specifically with Examples and a Comparative Example.

### EXAMPLE 1

A polyol component formulation solution C having a formulation shown in Table 1 described below was used for the back support portion and the side portions, and "Cornate T-80" produced by Nippon Polyurethane Industry Co., Ltd., was used as an isocyanate component. These were mixed in such a way that the isocyanate index became 100, and thereby an urethane formulation stock solution was prepared.

A polyol component formulation solution D having a formulation shown in Table 1 described below was used for the lumbar portion, and "Cornate T-80" produced by Nippon Polyurethane Industry Co., Ltd., the same one as described above, was used as an isocyanate component. These were mixed in such a way that the isocyanate index became 85, and thereby an urethane formulation stock solution was prepared.

**Table 1**

| | | | Formulation ratio (parts by weight) | | |
|---|---|---|---|---|---|
| Classification | Product name | Manufacturer | C | D | E |
| Polyol | EXCENOL 828 | Asahi Glass Co., Ltd. | 70 | | 46 |
| Polyol | EXCENOL 838 | Asahi Glass Co., Ltd. | | 48 | |
| Polymer polyol | SANNIX KC855 | Sanyo Chemical Industries, Ltd. | 30 | 48 | 46 |
| Cross-linking agent | EXCENOL 555 | Asahi Glass Co., Ltd. | | 4 | |
| Cross-linking agent | EXCENOL 981 | Asahi Glass Co., Ltd. | | | 8 |
| Amine catalyst | TEDA-L33 | Tosoh Corporation | 0.4 | 0.5 | 0.4 |
| Amine catalyst | TOYOCAT-ET33B | Tosoh Corporation | 0.2 | 0.3 | 0.2 |
| Foam stabilizer | BY10-304 | Dow Corning Toray Co., Ltd. | 0.5 | 1 | 0.5 |
| Foaming agent | Water | | 4 | 2.4 | 3.5 |

The above-described urethane formulation stock solutions C and D were supplied in such a way that the density of the lumbar portion became 65 kg/m³, that the density of the back support portion became 40 kg/m³, and that the density of the side portions became 40 kg/m³, and thereby a back pad, wherein the thickness of the lumbar portion and the back support portion was 40 mm, was produced in accordance with an ordinary method.

The densities and the hardnesses of the lumbar portion, the back support portion and the side portions of this back pad, and the results of a subjective evaluation test for the vibration absorbability and body stability are shown in Table 2. In addition, the hysteresis losses of the lumbar portion and the back support portion are shown in Fig. 2.

### EXAMPLE 2

The same urethane formulation stock solution as described in Example 1 was used for the back support portion and the lumbar portion.

A polyol component formulation solution E having a formulation shown in Table 1 was used for the side portions, and in addition, "Cornate T-80" produced by Nippon Polyurethane Industry Co., Ltd., the same one as described above, was used as an isocyanate component. These were mixed in such a way that the isocyanate index became 100, and thereby an urethane formulation stock solution was prepared.

The above-described urethane formulation stock solutions C, D and E were supplied in such a way that the density of the lumbar portion became 65 kg/m³, the same density as described in Example 1, that the density of the back support portion became 40 kg/m³, the same density as described in Example 1, and that the density of the side portions became 45 kg/m³, a higher density than the one described in Example 1, and thereby a back pad, wherein the thickness of the lumbar portion and the back support portion was 40 mm, was produced in accordance with an ordinary method.

The densities and the hardnesses of the lumbar portion, the back support portion and the side portions of this back pad, and the results of a subjective evaluation test for the vibration absorbability and body stability are shown in Table 2.

### COMPARATIVE EXAMPLE 1

A seat cushion pad for a vehicle was produced as in Example 1 except that the same urethane formulation stock solution as the one used for the back support portion in Example 1 was used as a raw material for all portions. That is, the formulation C was used as the polyol formulation solution, and the isocyanate index was set at 100. All densities were adjusted to be 40 kg/m³. The results are shown in Table 2. The hysteresis loss was the same as that of the back support portion in Fig. 2.

**Table 2**

| Examples | Lumbar portion | | | | | Back support portion | | | | | Side portion | | | | Vibration absorbability | Body stability |
|---|---|---|---|---|---|---|---|---|---|---|---|---|---|---|---|---|
| | Raw material | Density Index | (kg/m³) | Hardness (N) | Hysteresis loss ratio | Raw material | Density Index | (kg/m³) | Hardness (N) | Hysteresis loss ratio material | Raw Density | Index | (kg/m³) | Push-pull hardness (N) | | |
| Example 1 | D | 85 | 65 | 208 | 25 | C | 100 | 40 | 117 | 31 | C | 100 | 40 | 8.4 | ○ | △ |
| Example 2 | D | 85 | 65 | 208 | 25 | C | 100 | 40 | 117 | 31 | E | 100 | 45 | 18.3 | ○ | ○ |
| Comparative Example 1 | D | 100 | 40 | 117 | 31 | C | 100 | 40 | 117 | 31 | C | 100 | 40 | 8.4 | △ | △ |

As shown in Table 2, Examples 1 and 2 are excellent in vibration absorbing performance and body support performance.

Although the present invention has been described in detail by using a specific embodiment, it is apparent to those skilled in the art that various modifications may be made without departing from the spirit and the scope of the present invention.
The present application is based on the Japanese Patent Application filed on February 6, 2007 (Japanese Patent Application No. 2007-26955), and incorporates by reference the application in its entirety.

## Claims

1. A back pad for a vehicle seat having at least a lumbar portion and a back support portion disposed above the lumbar portion, wherein the hysteresis loss of the back support portion is larger than that of the lumbar portion and the hardness of the lumbar portion is higher than that of the back support portion.

2. The back pad according to claim 1, wherein the hysteresis loss of the back support portion is 1.01 to 10 times larger than the hysteresis loss of the lumbar portion.

3. The back pad according to claim 1, wherein the hardness of the lumbar portion is 1.01 to 10 times higher than the hardness of the back support portion.

4. The back pad according to claim 1, wherein the thickness of the lumbar portion and the back support portion is 5 to 40 mm.

5. The back pad according to claim 1, which comprises side portions disposed at both left and right sides of the lumbar portion and the back support portion.

6. The back pad according to claim 5, wherein formulations of foam materials for the lumbar portion, the back support portion and the side portions are different.

7. A vehicle seat comprising the back pad according to any one of claims 1 to 6.
